# EUROPÄISCHE PATENTSCHRIFT

(11) **EP 0 475 299 B1**
(45) Veröffentlichungstag und Bekanntmachung des Hinweises auf die Patenterteilung: **25.01.1995**
(21) Anmeldenummer: 91115109.0
(22) Anmeldetag: 06.09.1991
(51) Int. Cl.: A61C 8/00

(54) **Enossales Einzelzahnimplantat mit Verdrehsicherung**
Dental implant having means for preventing torsion
Implant dentaire avec blockage de rotation

(30) Priorität: 08.09.1990 DE 4028855
(43) Veröffentlichungstag der Anmeldung: 18.03.1992
(73) Patentinhaber: EBERLE MEDIZINTECHNISCHE ELEMENTE GMBH, D-75449 Wurmberg (DE); IMZ-Fertigungs- und Vertriebsgesellschaft für dentale Technologie mbH, 70794 Filderstadt (DE)
(72) Erfinder: Dürr, Walter, W-7537 Remchingen (DE); Kirsch, Axel, Dr., W-7000 Stuttgart 1 (DE)
(74) Vertreter: Goddar, Heinz J., Dr.

(56) Entgegenhaltungen:
- EP-A- 0 370 590
- DE-U- 9 002 824
- US-A- 4 746 293
- US-A- 4 756 689

## Beschreibung

Die Erfindung betrifft ein enossales Einzelzahnimplantat mit Verdrehsicherung für einen festsitzenden Zahnersatz, dessen Befestigungseinrichtungen einen Befestigungskopf und einen mit einem Grundkörper indirekt über eine Schraubverbindung verbindbaren Implantatpfosten aus Metall aufweisen, mit einer mit einem Zentrierbund versehenen, in das offene Ende des Grundkörpers einschraubbaren und mit einer Schulter an den oberen Rand des Grundkörpers anlegbaren Distanzhülse aus Metall, in die der Implantatpfosten einschraubbar ist, wobei die Distanzhülse ein mit einem Außen-Einsetsgewinde in den Grundkörper einschraubbares Distanzhülsen-Unterteil und ein mit der Schulter zum Anlegen an den distalen Rand des Grundkörpers versehenes Distanzhülsen-Oberteil aufweist, welches mit dem Grundkörper verdrehungsgesichert verbindbar ist. Ein derartiges Implantat ist aus der EP-A-0 0 400 224 bekannt.

Enossale Implantate, wie sie beispielsweise in der EP-OS 0216 031 beschrieben sind, haben sich in der Praxis durchaus bewährt. Bei Verwendung als Einzelzahnimplantate besteht dabei jedoch eine Schwierigkeit insoweit, als keine verläßliche Sicherung des Zahnersatzes gegen ein Verdrehen relativ zum Grundkörper erreichbar ist, es sei denn, die Einzelteile des Implantates sowie der Zahnersatz werden miteinander verklebt, wobei sich aber Schwierigkeiten bei z.B. einem späteren Austausch des Zahnersatzes oder des Implantatpfostens, ggf. nach einem bruchbedingten Versagen desselben, ergeben.

Um eine Verdrehsicherheit zu erzielen, ist das Distanzhülsen-Oberteil des gattungsgemäßen Einzelzahnimplantates nach dem Hauptpatent ringmutterartig ausgebildet und läßt sich mittels eines Innen-Kontergewindes mit wesentlich geringerer Steigung als das Einsetzgewinde des Distanzhülsen-Unterteiles auf ein nahe dem distalen Rand des Distanzhülsen-Unterteiles an diesem vorgesehenes entsprechendes Außengewinde aufschrauben. Dementsprechend lassen sich der Grundkörper, das Distanzhülsen-Oberteil und das Distanzhülsen-Unterteil miteinander verkontern und verspannen, wodurch sowohl das den Implantatpfosten aufnehmende Distanzhülsen-Unterteil als auch das Distanzhülsen-Oberteil verdrehgesichert sind. Ungünstig ist dabei in manchen Anwendungsfällen allerdings, daß das Distanzhülsen-Oberteil und das Distanzhülsen-Unterteil beim Kontern mit speziellen Werkzeugen gegen Relativdrehung gesichert werden müssen. Die Bedienung derartiger Spezialwerkzeuge bereitet insbesondere bei noch verhältnismäßig unerfahrenen Operateuren manchmal Probleme.

Der Erfindung liegt daher die Aufgabe zugrunde, das verdrehgesicherte Einzelzahnimplantat nach der EP-A-0 400 224 dahingehend weiterzubilden, daß mit einfacheren Mitteln eine zuverlässige Verdrehsicherung erzielt werden kann.

Erfindungsgemäß wird diese Aufgabe dadurch gelöst, daß der Grundkörper an seinem distalen Ende eine Ringausnehmung zur Aufnahme des proximalen Zentrierbundes des Distanzhülsen-Oberteiles aufweist, die mit mindestens einem Grundkörper-Formschlußelement versehen ist; daß der Zentrierbund mindestens ein zu dem/den Grundkörper/Formschlußelement(en) komplementäres Distanzhülsen-Formschlußelement aufweist; daß die Innenbohrung des Distanzhülsen-Oberteiles in ihrem distalen Bereich einen Längsabschnitt größerer Weite als im proximalen Bereich, in dem ihr Durchmesser im wesentlichen demjenigen der Innenbohrung des Grundkörpers entspricht, aufweist, wobei im Übergang der beiden Bereiche unterschiedlicher Weite eine Anschlagschulter gebildet ist; daß das Distanzhülsen-Unterteil in seinem distalen Bereich einen Kopfabschnitt aufweist, dessen Außendurchmesser dem Innendurchmesser des im distalen Bereich größeren Innendurchmessers des Distanzhülsen-Oberteiles entspricht und der unter Bildung einer zu der Anschlagschulter des Distanzhülsen-Oberteiles komplementären Ringschulter in einen proximalen Bereich übergeht, dessen Außendurchmesser im wesentlichen dem Durchmesser der Innenbohrung des Grundkörpers entspricht und der das Einsetzgewinde trägt.

Dabei kann vorgesehen sein, daß das distale Ende des Distanzhülsen-Unterteiles nach dessen Einschrauben in den Grundkörper distal weniger weit vorsteht als der distale Rand des Distanzhülsen-Oberteiles.

Die Erfindung sieht ggf. auch vor, daß das/die Grundkörper/Formschlußelement(e) mindestens eine axiale Grundkörper-Formschlußtasche in der Anlageschulter der Ringausnehmung und das/die Distanzhülsen-Formschlußelement(e) dementsprechend mindestens eine komplementäre Distanzhülsen-Formschlußzunge aufweisen.

Eine weitere Ausführungsform der Erfindung zeichnet sich dadurch aus, daß an dem Grundkörper und an dem Distanzhülsen-Oberteil jeweils vier mit gleichmäßigen Umfangsabstand angeordnete Formschlußelemente vorgesehen sind.

Nach der Erfindung kann auch vorgesehen sein, daß das Innengewinde des Distanzhülsen-Unterteiles sich lediglich über einen distalen Teil der gesamten Längserstreckung desselben erstreckt.

Die Erfindung schlägt ferner vor, daß das Distanzhülsen-Oberteil an seinem distalen Rand Aufbau-Formschlußelemente zum verdrehungsgesicherten Aufbau des Zahnersatzes aufweist.

Dabei kann vorgesehen sein, daß die Aufbau-Formschlußelemente Oberflächenvertiefungen und/oder -Erhöhungen des Stirnrandes und/oder der Mantelfläche des Distanzhülsen-Oberteiles aufweisen.

Ferner schlägt die Erfindung ggf. vor, daß der mit Formschlußelementen versehene Bereich der Mantelfläche des Distanzhülsen-Oberteiles sich in distaler Richtung konisch verjüngend ausgebildet ist.

Auch kann nach der Erfindung vorgesehen sein, daß das Distanzhülsenoberteil an seinem distalen Ende als polygonaler Befestigungskopf für den Zahnersatzaufbau ausgebildet ist.

Der Erfindung liegt die überraschende Erkenntnis zugrunde, daß es gelingt, unter Verzicht auf spezielle Schraub-und Konterwerkzeuge, wie sie bei dem Einzelzahnimplantat nach dem Hauptpatent notwendig sind, eine zuverlässige Verdrehsicherung zu erzielen, in dem zwischen dem Distanzhülsen-Oberteil und dem Grundkörper eine ausschließlich in Rotationsrichtung sichernde Formschlußverbindung hergestellt wird, welche wiederum mittels des schraubenartig ausgebildeten Distanzhülsen-Unterteiles in axialer Richtung gesichert wird. Zwar sind dabei das Distanzhülsen-Unterteil und der darin einschraubbare Implantatpfosten gegenüber dem Grundkörper nicht verdrehungsgesichert, sofern nicht ein zusätzliches Verkleben oder Zementieren vorgenommen wird, jedoch ist das Distanzhülsen-Oberteil zuverlässig, nämlich durch Formschlußverbindung mit dem Grundkörper, verdrehgesichert, so daß hieran ein Zahnersatz verdrehgesichert aufgebaut werden kann. Insbesondere eignet sich das enossale Einzelzahnimplantat nach der Erfindung für verdrehgesicherte Aufbauten, wie sie dem Gegenstand der gleichzeitig eingereichten Patentanmeldung P 40 28 856.0 bilden. Im übrigen eignet sich das Einzelzahnimplantat nach der Erfindung natürlich ggf. auch als normales Implantat, also beispielsweise zur Befestigung von Brücken oder dergleichen, wenn dabei auf Verdrehsicherheit besonderer Wert gelegt wird.

Weitere Merkmale und Vorteile der Erfindung ergeben sich aus der nachfolgenden Beschreibung, in der ein Ausführungsbeispiel anhand der schematischen Zeichnung im einzelnen erläutert ist. Dabei zeigt:
- Fig. 1: ein Ausführungsbeispiel des enossalen Einzelzahnimplantates nach der Erfindung in Explosionsdarstellung im axialen Längsschnitt;
- Fig. 2: das Einzelzahnimplantat von Figur 2 in zusammengebautem Zustand;
- Fig. 3: das Distanzhülsen-Unterteil des Einzelzahnimplantates von Figur 1 und 2 im axialen Längsschnitt;
- Fig. 4: das Distanzhülsen-Unterteil von Figur 3 in der Draufsicht;
- Fig. 5: den Grundkörper des Einzelzahnimplantates von Figur 1 und Figur 2 in der Draufsicht;
- Fig. 6: das Distanzhülsen-Oberteil des Einzelzahnimplantates von Figur 1 und Figur 2 in der Draufsicht;
- Fig. 7: das Distanzhülsen-Oberteil des Einzelzahnimplantates von Figur 1 und Figur 2 im axialen Längsschnitt; und
- Fig. 8: das Distanzhülsen-Oberteil von Figur 7 in der Ansicht von unten.

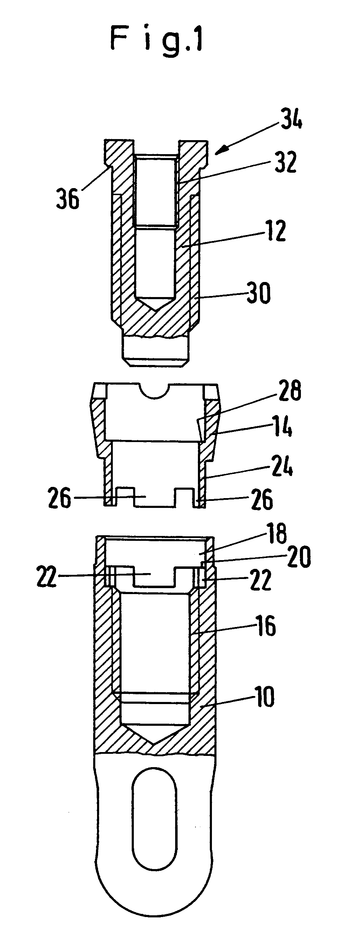

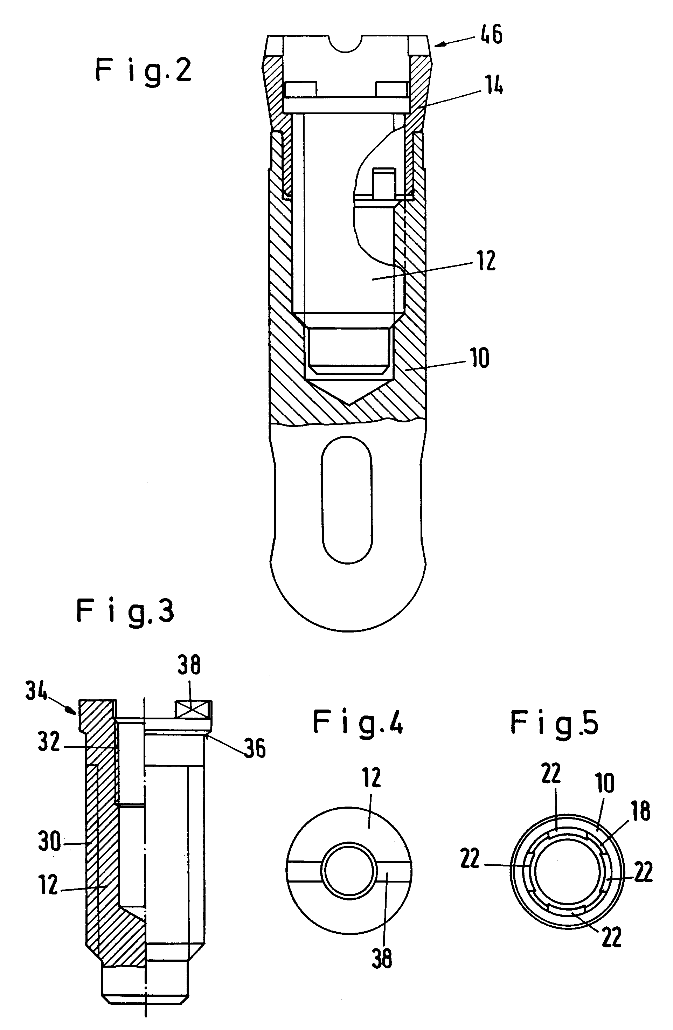

Wie Figur 1 und 2 erkennen lassen, weist das Einzelzahnimplantat bei dem dort gezeigten Ausführungsbeispiel einen Grundkörper 10 bekannter Art auf, beispielsweise, wie in der DE-OS 38 39 724 beschrieben, aus Hydroxylapatit beschichtetem Titan bestehend, ferner ein Distanzhülsen-Unterteil 12 sowie ein Distanzhülsen-Oberteil 14.

Der Grundkörper 10 ist mit einem Innengewinde 16 versehen und weist nahe seinem distalen, in der Zeichnung oberen Rand eine Ringausnehmung 18 auf, die an ihrem proximalen Ende an eine Anlageschulter 20 angrenzt. In der Anlageschulter 20 sind vier mit gleichmäßigem Umfangsabstand angeordnete vertiefte Formschlußtaschen 22 vorgesehen.

Das Distanzhülsen-Oberteil 14 weist an seinem proximalen Ende einen Zentrierbund 24 auf, dessen Außendurchmesser demjenigen der Ringausnehmung 18 des Grundkörpers 10 entspricht. Der Zentrierbund 24 weist vier mit gleichmäßigem Umfangsabstand angeordnete Formschlußzungen 26 auf, die zu den Formschlußtaschen 22 des Grundkörpers 10 komplementär sind. Der distale Teil der Innenbohrung des Distanzhülsen-Oberteiles 14 weist einen größeren Durchmesser auf als der proximale Teil, wobei im Übergang der beiden Teile oder Abschnitte eine Anschlagschulter 28 gebildet ist.

Das Distanzhülsen-Unterteil ist an seinem Außenumfang mit einem Einsetzgewinde 30 versehen, welches dem Innengewinde 16 des Grundkörpers 10 entspricht. In seinem distalen Bereich weist das Distanzhülsen-Unterteil 12 ein Innengewinde 32 auf, in welches ein Implantatpfosten einschraubbar ist, wie er beispielsweise beim Hauptpatent - dort allerdings einzementierbar - oder in der DE-OS 38 39 724 beschrieben ist. Am distalen Ende des Distanzhülsen-Unterteiles 12 ist ein Kopfabschnitt 34 vergrößerten Durchmessers gebildet, der an eine in proximale Richtung weisende Ringschulter 36 anschließt, die zu der Anschlagschulter 28 des Distanzhülsen-Oberteiles 14 komplementär ist.

Aus Figur 3 und Figur 4 ist erkennbar, daß am distalen Ende des Distanzhülsen-Unterteiles 12 ein Ansatzsteg 38 zum Ansetzen eines Einschraubwerkzeuges vorgesehen ist.

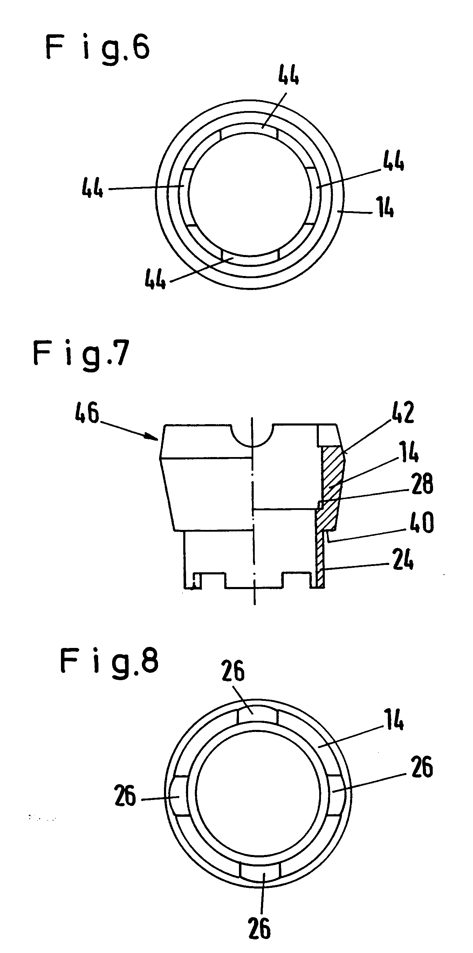

Aus Figur 5 geht die umfangsmäßig gleichmäßige Anordnung der Formschlußtaschen 22 der Ringausnehmung 18 des Grundkörpers 10 hervor.

Figur 7 läßt erkennen, daß an das distale Ende des Zentrierbundes 24 des Distanzhülsen-Oberteiles 14 eine Schulter 40 anschließt, die zum Anlegen, in der weiter unten noch beschriebenen Weise, an den distalen Umfangsrand des Grundkörpers 10 bestimmt ist. Ferner geht aus Figur 6 hervor, daß das Distanzhülsen-Oberteil an seinem distalen Ende eine konische Mantelfläche 42 aufweist, die mit Erhebungen oder Vertiefungen versehen sein kann, welche als Formschlußelemente für einen an das Distanzhülsen-Unterteil verdrehgesichert anbringbaren Zahnaufbau dienen können. Hierfür können auch Formschlußelemente 44 verwendet werden, die als in distaler Richtung weisende Vertiefungen im oberen Bereich des Distanzhülsen-Oberteiles vorgesehen sind. Figur 8 läßt die gleichmäßige Verteilung der bereits beschriebenen Formschlußzungen 26 um den Umfang des Zentrierbundes 24 des Distanzhülsen-Oberteiles 14 erkennen.

Der Zusammenbau des beschriebenen Einzelzahnimplantates findet wie folgt statt: In das bereits in das Körpergewebe bzw. den Kieferknochen eingehaltenen Grundkörper 10 wird das Distanzhülsen-Oberteil 14 eingesteckt, wobei die Formschlußzungen 26 im Zusammenwirken mit den Formschlußtaschen 22 eine verdrehgesicherte Steckverbindung bewirken. Anschließend wird das Distanzhülsen-Unterteil 12 in den Grundkörper 10 eingeschraubt, wobei die Schulter 40 des Distanzhülsen-Oberteiles gegen den distalen Umfangsrand des Grundkörpers 10 und die Ringschulter 36 des Distanzhülsen-Unterteiles gegen die Anschlagschulter 28 des Distanzhülsen-Oberteiles gepreßt wird, so daß der Grundkörper 10, das Distanzhülsen-Oberteil 14 und das Distanzhülsen-Unterteil 12 in axialer Richtung fest miteinander verbunden sind. Insgesamt wird hierdurch erreicht, daß das Distanzhülsen-Oberteil 14 mit seinem Kopfabschnitt 34 gegenüber dem Grundkörper 10 sowohl in axialer Richtung als auch in Rotationsrichtung festgelegt ist. Der bekannte Implantatpfosten für den Zahnersatzaufbau wird dann in das Innengewinde 32 des Distanzhülsen-Unterteiles 12 eingeschraubt. Da der Implantatpfosten selbst nicht verdrehgesichert relativ zum Grundkörper 10 angeordnet ist, weil ja das Distanzhülsen-Unterteil 12 lediglich in dem Grundkörper 10 eingeschraubt ist, erfolgt ein verdrehsicheres Festlegen des Zahnersatzaufbaus ausgehend von dem Kopfabschnitt 34 des Distanzhülsen-Oberteiles 14. der über entsprechende Formschlußelemente zum verdrehgesicherten Anbringen und Festlegen des Aufbaus verfügt.

### Bezugszeichenliste

- 10: Grundkörper
- 12: Distanzhülsen-Unterteil
- 14: Distanzhülsen-Oberteil
- 16: Innengewinde
- 18: Ringausnehmung
- 20: Anlageschulter
- 22: Formschlußtaschen
- 24: Zentrierbund
- 26: Formschlußzungen
- 28: Anschlagschulter
- 30: Einsetzgewinde
- 32: Innengewinde
- 34: Kopfabschnitt
- 36: Ringschulter
- 38: Ansetzsteg
- 40: Schulter
- 42: Mantelfläche
- 44: Formschlußelement

## Patentansprüche

1. Enossales Einzelzahnimplantat mit Verdrehsicherung (44) für einen festsitzenden Zahnersatz, dessen Befestigungseinrichtungen einen Befestigungskopf und einen mit einem Grundkörper (10) indirekt über eine Schraubverbindung (32) verbindbaren Implantatpfosten aus Metall aufweisen, mit einer mit einem Zentrierbund versehenen, in das offene Ende des Grundkörpers (10) einschraubbaren und mit einer Schulter (40) an den oberen Rand des Grundkörpers anlegbaren Distanzhülse (12, 14) aus Metall, in die der Implantatpfosten einschraubbar ist, wobei die Distanzhülse ein mit einem Außen-Einsetzgewinde in den Grundkörper einschraubbares Distanzhülsen-Unterteil (12) und ein mit der Schulter (40) zum Anlegen an den distalen Rand des Grundkörpers versehenes Distanzhülsen-Oberteil (14) aufweist, welches mit dem Grundkörper verdrehungsgesichert verbindbar ist, dadurch gekennzeichnet, daß der Grundkörper (10) an seinem distalen Ende eine Ringausnehmung (18) zur Aufnahme des proximalen Zentrierbundes (24) des Distanzhülsen-Oberteiles (14) aufweist, die mit mindestens einem Grundkörper-Formschlußelement (22) versehen ist; daß der Zentrierbund (24) mindestens ein zu dem/den Grundkörper/Formschlußelement(en) (22) komplementäres Distanzhülsen-Formschlußelement (26) aufweist; daß die Innenbohrung des Distanzhülsen-Oberteiles (14) in ihrem distalen Bereich einen Längsabschnitt größerer Weite als im proximalen Bereich, in dem ihr Durchmesser im wesentlichen demjenigen der Innenbohrung des Grundkörpers (10) entspricht, aufweist, wobei im Übergang der beiden Bereiche unterschiedlicher Weite eine Anschlagschulter (28) gebildet ist; daß das Distanzhülsen-Unterteil (12) in seinem distalen Bereich einen Kopfabschnitt (34) aufweist, dessen Außendurchmesser dem Innendurchmesser des im distalen Bereich größeren Innendurchmessers des Distanzhülsen-Oberteiles (14) entspricht und der unter Bildung einer zu der Anschlagschulter (28) des Distanzhülsen-Oberteiles (14) komplementären Ringschulter (36) in einen proximalen Bereich übergeht, dessen Außendurchmesser im wesentlichen dem Durchmesser der Innenbohrung des Grundkörpers (10) entspricht und der das Einsetzgewinde (30) trägt.

2. Einzelzahnimplantat nach Anspruch 1, dadurch gekennzeichnet, daß das distale Ende des Distanzhülsen-Unterteiles (12) nach dessen Einschrauben in den Grundkörper (10) distal weniger weit vorsteht als der distale Rand des Distanzhülsen-Oberteiles (14).

3. Einzelzahnimplantat nach Anspruch 1 oder 2, dadurch gekennzeichnet, daß das/die Grundkörper/Formschlußelement(e) mindestens eine axiale Grundkörper-Formschlußtasche (22) in der Anlageschulter (20) der Ringausnehmung (18) und das/die Distanzhülsen-Formschlußelement(e) dementsprechend mindestens eine komplementäre Distanzhülsen-Formschlußzunge (26) aufweisen.

4. Einzelzahnimplantat nach einem der vorangehenden Ansprüche, dadurch gekennzeichnet: daß an dem Grundkörper (10) und an dem Distanzhülsen-Oberteil (14) jeweils vier mit gleichmäßigen Umfangsabstand angeordnete Formschlußelemente (22, 26) vorgesehen sind.

5. Einzelzahnimplantat nach einem der vorangehenden Ansprüche, dadurch gekennzeichnet, daß das Innengewinde (16) des Distanzhülsen-Unterteiles (12) sich lediglich über einen distalen Teil der gesamten Längserstreckung desselben erstreckt.

6. Einzelzahnimplantat nach einem der vorangehenden Ansprüche, dadurch gekennzeichnet, daß das Distanzhülsen-Oberteil (14) an seinem distalen Rand Aufbau-Formschlußelemente (44) zum verdrehungsgesicherten Aufbau des Zahnersatzes aufweist.

7. Einzelzahnimplantat nach Anspruch 6, dadurch gekennzeichnet, daß die Aufbau-Formschlußelemente (44) Oberflächenvertiefungen und/oder -Erhöhungen des Stirnrandes und/oder der Mantelfläche (42) des Distanzhülsen-Oberteiles (14) aufweisen.

8. Einzelzahnimplantat nach Anspruch 7, dadurch gekennzeichnet, daß der mit Formschlußelementen (44) versehene Bereich der Mantelfläche des Distanzhülsen-Oberteiles (14) sich in distaler Richtung konisch verjüngend ausgebildet ist.

9. Einzelzahnimplantat nach einem der Ansprüche 6 bis 8, dadurch gekennzeichnet, daß das Distanzhülsenoberteil (14) an seinem distalen Ende als polygonaler Befestigungskopf für den Zahnersatzaufbau ausgebildet ist.

## Claims

1. An endo-osseous single-tooth implant comprising a means (44) for preventing twisting of a firmly-fixed dental prosthesis having securing devices having a head and a metal implant post connectable to a base member (10) indirectly via a screw connection (32) and comprising a metal spacer sleeve (12, 14) formed with a centring collar and intended for screwing into the open end of the base member (10) and having a shoulder (40) for pressing against the top edge of the base member, the implant post being screwable into the spacer sleeve, the sleeve comprising a bottom part (12) having an outer insertion thread screwable into the base member and a top part (14) comprising the shoulder (40) for pressing against the distal edge of the base member, the top part being connectable in non-twistable manner to the base member, characterised in that the distal end of the base member (10) is formed with an annular recess (18) for receiving the proximal centring collar (24) of the spacer-sleeve top part (14), the recess containing at least one base-member locking element (22); the centring collar (24) comprises at least one spacer-sleeve locking element (23) complementary with the base-member locking element or elements (22); the distal region of the inner bore of the spacer-sleeve top part (14) has a longitudinal portion wider than in the proximal region, in which its diameter is substantially equal to that of the inner bore of the base member (10), an abutment shoulder (28) being formed in the transition between the two regions of different width; the distal region of the bottom part (12) of the spacer sleeve has a head portion (34), the outside diameter of which is equal to the inside diameter of the top part (14), which has a larger inside diameter in the distal region, the head part having an annular shoulder (36) complementary with the abutment shoulder (28) of the top part (14) and merging into a proximal region whose outside diameter is substantially equal to the diameter of the inner bore of the base member (10) and is formed with the insertion thread (30).

2. A single-tooth implant according to claim 1, characterised in that the distal end of the bottom part (12), after being screwed into the base member (10), projects less far distally than the distal edge of the top part (14).

3. A single-tooth implant according to claim 1 or 2, characterised in that the base-member locking element or elements comprise at least one base-member locking pocket (22) in the abutment shoulder (20) of the annular recess (18) and the spacer-sleeve locking element or elements correspondingly have at least one complementary spacer-sleeve locking tongue (26).

4. A single-tooth implant according to any of the preceding claims, characterised in that the base member (10) and the spacer-sleeve top part (14) are each formed with four locking elements (22, 26) spaced at uniform peripheral intervals.

5. A single-tooth implant according to any of the preceding claims, characterised in that the inside thread (16) of the bottom part (12) extends only over a distal part of the total length thereof.

6. A single-tooth implant according to any of the preceding claims, characterised in that the distal edge of the top part (14) has assembly locking elements (44) for twist-proof fitting of the dental prosthesis.

7. A single-tooth implant according to claim 6, characterised in that the assembly locking elements (44) have surface recesses and/or raised portions in the end edge and/or in the outer surface (42) of the spacer-sleeve top part (14).

8. A single-tooth implant according to claim 7, characterised in that the region of the outer surface of the top part (14) formed with locking elements (44) tapers conically in the distal direction.

9. A single-tooth implant according to any of claims 6 to 8, characterised in that the distal end of the top part (14) is in the form of a polygonal head for securing the dental prosthesis fitting.

## Revendications

1. Implant dentaire unitaire intra-osseux avec blocage en rotation (44) qui est destiné à une prothèse dentaire fixe et dont les dispositifs de fixation comprennent une tête de fixation et un pilier d'implant en métal pouvant être relié indirectement à un corps de base (10) par l'intermédiaire d'une liaison vissée (32), ledit implant comprenant une douille d'écartement (12, 14) en métal qui est munie d'un collet de centrage, qui peut être vissée dans l'extrémité ouverte du corps de base (10), dont un épaulement (40) peut être posé sur le bord supérieur du corps de base et dans laquelle le pilier d'implant peut être vissé, la douille d'écartement comportant une partie inférieure (12) de douille d'écartement, qui peut être vissée dans le corps de base au moyen d'un filet extérieur de montage, et une partie supérieure (14) de douille d'écartement qui est munie de l'épaulement (40) destiné à être appliqué sur le bord distal du corps de base et qui peut être reliée au corps de base de manière bloquée en rotation, caractérisé en ce que le corps de base (10) comporte, à son extrémité distale, un évidement annulaire (18) qui est destiné à recevoir le collet proximal de centrage (24) de la partie supérieure (14) de la douille d'écartement et qui est muni d'au moins un élément (22) de solidarisation par complémentarité de formes du corps de base ; en ce que le collet de centrage (24) comporte au moins un élément (26) de solidarisation par complémentarité de formes de la douille d'écartement, qui est complémentaire du ou des éléments (22) de solidarisation par complémentarité de formes du corps de base ; en ce que le perçage intérieur de la partie supérieure (14) de la douille d'écartement présente, dans sa zone distale, une portion longitudinale d'une largeur supérieure à celle de la zone proximale dans laquelle son diamètre correspond sensiblement à celui du perçage intérieur du corps de base (10), un épaulement de butée (28) étant ainsi formé au point de transition entre les deux zones de largeurs différentes ; en ce que la partie inférieure (12) de la douille d'écartement comporte, dans sa zone distale, une portion de tête (34) dont le diamètre extérieur correspond au plus grand diamètre intérieur existant dans la zone distale de la partie supérieure (14) de la douille d'écartement et qui, en formant un épaulement annulaire (36) complémentaire de l'épaulement de butée (28) de la partie supérieure (14) de la douille d'écartement, se prolonge par une zone proximale dont le diamètre extérieur correspond sensiblement au diamètre du perçage intérieur du corps de base (10) et qui porte le filet de montage (30).

2. Implant dentaire unitaire selon la revendication 1, caractérisé en ce qu'à l'issue de son vissage dans le corps de base (10), l'extrémité distale de la partie inférieure (12) de la douille d'écartement dépasse moins loin, sur le côté distal, que le bord distal de la partie supérieure (14) de la douille d'écartement.

3. Implant dentaire unitaire selon la revendication 1 ou 2, caractérisé en ce que le ou les éléments de solidarisation par complémentarité de formes du corps de base comportent, dans l'épaulement de butée (20) de l'évidement annulaire (18), au moins une cuvette axiale (22) de solidarisation par complémentarité de formes du corps de base et qu'en conséquence, le ou les éléments de solidarisation par complémentarité de formes de la douille d'écartement comportent au moins une languette complémentaire (26) de solidarisation par complémentarité de formes de la douille d'écartement.

4. Implant dentaire unitaire selon l'une des revendications précédentes, caractérisé en ce qu'il est prévu, sur le corps de base (10) et sur la partie supérieure (14) de la douille d'écartement, quatre éléments (22, 26) de solidarisation par complémentarité de formes disposés à intervalles circonférentiels réguliers.

5. Implant dentaire unitaire selon l'une des revendications précédentes, caractérisé en ce que le filet intérieur (16) de la partie inférieure (12) de la douille d'écartement ne s'étend que sur une partie distale de l'extension longitudinale totale de ladite partie inférieure.

6. Implant dentaire unitaire selon l'une des revendications précédentes, caractérisé en ce qu'au niveau de son bord distal, la partie supérieure (14) de la douille d'écartement comporte des éléments (44) de montage solidaire par complémentarité de formes pour monter la prothèse dentaire avec un blocage en rotation.

7. Implant dentaire unitaire selon la revendication 6, caractérisé en ce que les éléments (44) de montage solidaire par complémentarité de formes comportent des creux et/ou des surélévations du bord frontal et/ou de la surface périphérique (42) de la partie supérieure (14) de la douille d'écartement.

8. Implant dentaire unitaire selon la revendication 7, caractérisé en ce que la zone qui est pourvue d'éléments (44) de solidarisation par complémentarité de formes et qui appartient à la surface périphérique de la partie supérieure (14) de la douille d'écartement présente un rétrécissement conique dans le sens distal.

9. Implant dentaire unitaire selon l'une des revendications 6 à 8, caractérisé en ce qu'à son extrémité distale, la partie supérieure (14) de la douille d'écartement est conçue sous la forme d'une tête polygonale de fixation destinée au montage de la prothèse dentaire.
